(19) Europäisches Patentamt
European Patent Office
Office européen des brevets

(11) **EP 2 837 598 B1**

(12) **EUROPEAN PATENT SPECIFICATION**

(45) Date of publication and mention
of the grant of the patent:
**20.06.2018  Bulletin 2018/25**

(51) Int Cl.:
*C01F 7/30* (2006.01)          *C01F 7/36* (2006.01)
*C01F 7/44* (2006.01)          *C04B 22/06* (2006.01)

(21) Application number: **12873935.6**

(22) Date of filing: **10.04.2012**

(86) International application number:
**PCT/JP2012/059775**

(87) International publication number:
**WO 2013/153618 (17.10.2013 Gazette 2013/42)**

(54) **METHOD FOR PRODUCING ALUMINA**

VERFAHREN ZUR HERSTELLUNG VON ALUMINIUMOXID

PROCÉDÉ DE PRODUCTION D'ALUMINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.02.2015  Bulletin 2015/08**

(73) Proprietor: **Sumitomo Chemical Company Limited
Tokyo 104-8260 (JP)**

(72) Inventors:
• **AZUMA, Norifumi
Niihama-shi
Ehime 792-8521 (JP)**
• **YAMAMOTO, Koji
Niihama-shi
Ehime 792-8521 (JP)**

(74) Representative: **Vossius & Partner
Patentanwälte Rechtsanwälte mbB
Siebertstrasse 3
81675 München (DE)**

(56) References cited:
**JP-A- H0 859 231          JP-A- H04 270 114
JP-A- H08 301 616          JP-A- 2009 082 856
JP-A- 2010 047 457          JP-A- 2010 168 271
US-A1- 2010 093 909**

Remarks:
The file contains technical information submitted after
the application was filed and not included in this
specification

**Description**

Field of the Invention

The present invention relates to a method for producing alumina, more particularly to a method for producing high purity alumina able to be preferably used, for example, as a forming material for an inorganic oxide porous membrane having an insulation property, which is formed on a surface of a positive electrode, a negative electrode, or a separator constituting a lithium ion secondary battery.

Background of the Invention

Since alumina ($Al_2O_3$) has excellent physical and chemical characteristics, such as heat resistance, insulation properties, abrasive resistance, and corrosion resistance or the like, the alumina has been widely used for various applications. Further, high purity alumina whose purity is 99.99% or more and having a fine uniform particle size has wide use applications, such as in a translucent tube for a high pressure sodium lamp, a single crystal material such as a sapphire for a clock window, a high strength ceramic tool, and an abrasive for a magnetic tape or the like.

As a method for producing such alumina, Patent Document 1 discloses, for example, a method for hydrolyzing aluminium alkoxide, and calcining the produced aluminium hydroxide.

Incidentally, alumina which is produced by hydrolyzing the aluminium alkoxide, and calcining the produced aluminium hydroxide is in a state of agglomerated particles where a primary particle and a secondary particle to which the primary particle is bonded are agglomerated. For this reason, in order to provide monodispersed powder having a small particle diameter and a sharp particle size distribution, it is required for the agglomerated particles to be subject to a crushing treatment after dispersion of the agglomerated particles. When crushing the alumina, it has a tendency that the smaller a particle diameter becomes, the larger a growth rate and a shrinkage factor of a bonding site of the particles get. Therefore, there still remains a problem unresolved that even if the agglomerated particles and the secondary particle are crushed, the particles will reagglomerate to generate reagglomerated particles, and a partial friction during crushing gives rise to foreign matters mixing and contamination by impurities.

When producing an aluminium hydroxide that is raw materials for producing the alumina, formation conditions of the aluminium hydroxide affect how a crystal structure of the aluminium hydroxide to be produced is formed and the agglomerated particles are generated. The agglomerated particles contained in the aluminium hydroxide have an action of bonding a particle and a particle, and accelerating abnormal grains growth of crystal grains (for example, see Non Patent Document 1). Further, whether how the crystal structure of the aluminium hydroxide to be produced is formed and the agglomerated particles are generated also affect alumina which is produced by using the aluminium hydroxide as its raw materials, and there is a possibility that alumina containing a lot of agglomerated particles is produced. Accordingly, indeed the above-indicated Patent Document 1 proposes a method for producing easily dispersible fine particles containing less agglomerated particles, taking advantage of hydrolysis, at low concentration, by adding a solvent other than alcohol participated in formation of the aluminium alkoxide, but the method has poor industrial productivity.

Prior Art Document

Patent Document

PLT1: Japanese Patent Application Laid-Open No. H 8-12325

Non Patent Document

NPLT1: Manufacturing Process of Ceramics 1984, published by the Ceramic society of Japan

Summary of the Invention

The present invention is proposed in view of such actual circumstances the prior art intrinsically has, and an object of the present invention is to provide a method for producing alumina capable of preventing the generation of reagglomerated particles and the contamination by impurities, and providing high purity alumina containing less agglomerated particles and occurring little foreign matters mixing.

As a result of intensive, study to the foregoing problem, the inventors of the present invention have found that high purity alumina containing less agglomerated particles and occurring little foreign matters mixing can be obtained by calcining aluminium hydroxide which is produced by hydrolyzing aluminium alkoxide and has predetermined cumulative pore volume, and by crushing, under predetermined conditions, a produced calcined body by means of the airflow crusher. Thus, the inventors have finally completed their invention.

(1) The present invention is directed to the following inventions.

The present invention provides a method for producing alumina comprising: a calcining step of calcining aluminium hydroxide which is produced by hydrolyzing aluminium alkoxide and whose cumulative pore volume (pore radius is within a range of 0.01 $\mu$m or more and 1 $\mu$m or less) is 0.6 mL/g or more, measured by means of mercury intrusion porosimetry, to produce an alumina calcined body; and a crushing step of crushing the alumina calcined body by an airflow crusher, with a speed at which the alumina calcined body passes through a crushing chamber of the airflow crusher of 500 m/s or more.

(2) A method for producing alumina according to (1), wherein the aluminium hydroxide has loosed bulk density of 0.10 to 0.25 g/cm$^3$, and tapped bulk density of 0.15 to 0.30 g/cm$^3$.

(3) The method for producing alumina according to (1), wherein the aluminium hydroxide is produced by an aluminium hydroxide producing step comprising: a first hydrolyzing step of hydrolyzing the aluminium alkoxide by adding an alcohol solution, whose water concentration is 5 to 30 wt %, to a solution containing the aluminium alkoxide produced by a solid-liquid reaction between metallic aluminium and alcohol so that a molar ratio of water with respect to the aluminium alkoxide is 1.5 to 2.0; and a second hydrolyzing step of hydrolyzing the aluminium alkoxide by adding water to a liquid mixture which is being subject to the first hydrolyzing step so that a molar ratio of water with respect to the aluminium alkoxide is 1.0 to 7.0, after separating and recovering the alcohol from the liquid mixture.

(4) The method for producing alumina according to (3), wherein the aluminium alkoxide is aluminium isopropoxide.

(5) The method for producing alumina according to (1), wherein in the calcining step, the aluminium hydroxide is calcined by applying thermal energy of 83736 to 146538 kJ (20000 to 35000 kcal) to the aluminium hydroxide of 1 kg.

(6) The method for producing alumina according to (1), wherein the crushing chamber of the airflow crusher has a powder contact portion against which a rotating particle of the alumina calcined body collides, and the powder contact portion is made of SUS or alumina ceramics.

Advantageous effect of the Invention

According to the method for producing alumina of the present invention, the invention enables prevention of the generation of reagglomerated particles and the contamination by impurities, thus providing high purity alumina containing less agglomerated particles and occurring little foreign matters mixing.

Brief Description of the Drawings

Fig. 1 is a schematic diagram for explaining a three-dimensional particle irregularity degree.
Fig. 2 is a view for explaining an example of formation of an aluminium calcined body produced in a calcining step.

Detailed Description of the Invention

Hereinafter, a detailed description will be made to a method for producing alumina according to the present invention with reference to the accompanying drawings.

A method for producing alumina according to the present invention comprises a calcining step S11 of calcining an aluminium hydroxide, which is produced by hydrolyzing aluminium alkoxide, and whose cumulative pore volume (pore radius is within a range of 0.01 $\mu$m or more and 1 $\mu$m or less) is 0.6 mL/g or more to be measured by means of the mercury intrusion porosimetry to produce an alumina calcined body; and a crushing step S12 of crushing the alumina calcined body using an airflow crusher, with a speed at which the alumina calcined body passes through a crushing chamber of the airflow crusher of 500 m/s or more.

According to the method for producing the alumina, the method allows production of high purity alumina containing less agglomerated particles and occurring little foreign matters mixing. The alumina produced by this method can preferably be used, for example, as a forming material for an inorganic oxide porous membrane used for a positive pole, a negative pole, or a separator constituting a lithium ion secondary battery, thereby forming an inorganic oxide porous membrane having good ion permeability, and excellent in heat resistance and insulation properties.

Herein, it should be noted that the high purity alumina implies not only high purity alumina containing less impurities, but also alumina occurring little foreign matters mixing other than alumina ingredients.

<1. Calcining step of aluminium hydroxide>

First of all, the method for producing alumina according to the present invention is characterized in that aluminium hydroxide is calcined, which is produced by hydrolyzing aluminium alkoxide, and whose cumulative pore volume (pore radius is within a range between 0.01 $\mu$m or more and 1 $\mu$m or less) is 0.6 mL/g or more.

The aluminium hydroxide produced by hydrolyzing the aluminium hydroxide, and whose cumulative pore volume (pore radius is 0.6 mL/g or more has an advantage that a primary particle is extremely small, is excellent in dispersiveness, and contains less agglomerated particles. Accordingly, an alumina calcined body produced by calcining the aluminium hydroxide can prevent the generation of alumina agglomerated particles that are strongly coupled and are hard to crush. The alumina calcined body can readily be crushed (dispersed) by crushing the alumina calcined body, under predetermined conditions, in a crushing step to be mentioned later. This produces high purity alumina containing less agglomerated particles and occurring little foreign matters mixing.

Furthermore, since the aluminium hydroxide is excellent in shape retainability and is able to be shaped and granulated easily by only the addition of water, the aluminium hydroxide allows prevention of the mixing of binder-derived impurities, as with a case where formation is made by a binder.

<1-1. Aluminium hydroxide>

As mentioned above, in the method for producing the alumina according to the present invention, the aluminium hydroxide is used, which is produced by hydrolyzing the aluminium alkoxide, and whose cumulative pore volume, pore radius is within a range of 0.01 $\mu$m or more and 1 $\mu$m or less, is 0.6 mL/g or more. In case the cumulative pore volume of the aluminium hydroxide is 0.6 mL/g or less, it will preclude the production of high purity alumina containing less agglomerated particles. Additionally, as the shape retainability becomes insufficient, one confronts with difficulties in forming and granulating the aluminium hydroxide, so that it will be a possibility of mixing impurities, and incurring marked deterioration of productivity.

As an upper limit of the cumulative pore volume, it is desirable to be 10mL/g or less. In case the cumulative pore volume exceeds 10 mL/g, a problem arises that it takes up too much time when drying and calcining a compact and a granulated body to produce an alumina compact due to excessive water retentivity.

The cumulative pore volume of the above-mentioned aluminium hydroxide can be measured by the mercury intrusion porosimetry. The mercury intrusion porosimetry is a method in which pressure is applied to cause mercury to be intruded into a pore of a powder sample, a mercury intrusion curve indicative of a relation between the pressure applied to the mercury and a mercury intrusion amount is found, and then a pore distribution curve, pore volume, and a specific surface area or the like are found on the basis of the mercury intrusion curve. In this connection, the measurement of the mercury intrusion porosimetry can be made by means of the mercury intrusion porosimetry.

The pore distribution curve obtained by means of the mercury intrusion porosimetry is for representing a relation between the size of a pore radius of the sample and the sum of the pore volume for each pore radius. Specifically, the pore distribution curve is obtained by plotting a mercury intrusion amount found, under each pressure P, by measuring the pore distribution, taking a mercury intrusion amount (dV/d log R [mL/g]), under each pressure P, calculated based on the Washburn's formula shown below as a vertical axis.

$$\text{Washburn's formula: pore radius (m)} = -2\,\gamma\cos\theta/P$$

P: pressure (Pa)
$\gamma$: surface tension of mercury (482 X $10^{-3}$ N/m)
$\theta$: contact angle of mercury (140 deg)

The aluminium hydroxide used for calcination is preferable for its loosed bulk density to be within a range of 0.10 to 0.25g/cm$^3$, more preferably within a range of 0.14 to 0.18 g/cm$^3$. Further, it is preferable for tapped bulk density to be within a range of 0.15 to 0.30 g/cm$^3$, more preferably within a range of 0.17 to 0.22 g/cm$^3$.

Thus, the use of the aluminium hydroxide whose cumulative pore volume is 0.6mL/g or more, the loosed bulk density is 0.10 to 0.25 g/cm$^3$, and the tapped bulk density is 0.15 to 0.30 g/cm$^3$ effectively inhibits the agglomeration of an alumina calcined body produced by calcination.

Herein, the "loosed bulk density" can be found by the method described in JIS R 9301-2-3. In other words, the loosed bulk density is a density, which is found by the mass of a sample collected by freely falling the sample (aluminium hydroxide powder) into a vessel (cylinder) having known volume that is vibration free and placed at rest, and by dividing the mass by the volume of the sample. Further, the "tapped bulk density" is a density obtained by measuring the loosed bulk density, followed by calculating the density based on the mass of the sample after a cylinder in which the sample is contained is made fallen, 100 times, from the predetermined height for compression.

<1-2. Production of aluminium hydroxide by hydrolysis of aluminium alkoxide>

Herein, the above-mentioned aluminium hydroxide is produced by hydrolyzing the aluminium alkoxide to be mentioned later. Namely, the method for producing the aluminium hydroxide includes an aluminium alkoxide producing step S21, and a hydrolyzing step S22.

(1) Aluminium alkoxide producing step

In the aluminium alkoxide producing step S21, as shown in the following formula (1), aluminium alkoxide $(Al(OR)_3)$ is produced by a solid-liquid reaction of metallic aluminium (Al) and alcohol (ROH).

$$Al + 3ROH \rightarrow Al\,(OR)_3 + 3/2H_2 \,.................. \qquad formula\ (1)$$

Where R is at least one respectively selected independently from the group of methyl, ethyl, n-propyl, isopropyl, n-butyl, isobutyl, neobutyl, n-pentyl, isopentyl, neopentyl, n-hexyl, isohexyl, neohexyl, n-heptyl, isoheptyl, neoheptyl, n-octyl, isooctyl, and neooctyl. Among other things, it is desirable to be at least one selected from methyl, ethyl, n-propyl, and isopropyl.

No special limitation is imposed on the metallic aluminium that is raw materials, but it is desirable to use high purity aluminium whose content of impurities, such as iron, silicone, copper, and magnesium or the like is 100 ppm or less, and purity is 99.99 % or more. Using such high purity metallic aluminium allows more effective production of high purity alumina containing less content of impurities. Thus, it eliminates purification of the aluminium alkoxide produced by using the metallic aluminium, which improves effectiveness.

No special limitation is imposed on a metal shape, but it may take any form of ingot, pellet, foil, line, and powder or the like.

As alcohol that is raw materials for forming a liquid phase, monohydric alcohol is used, whose carbon number is 1 to 8, preferably 1 to 4. Alcohol to be used as raw materials generally has a property that the longer a carbon chain, the more reactivity with the metallic aluminium lowers. More specifically, alcohol used as raw materials includes, for example, methyl alcohol, ethyl alcohol, n-propyl alcohol, isopropyl alcohol, n-butyl alcohol, sec-butyl alcohol, and tert-butyl alcohol or the like. Among other things, it is desirable to use isopropyl alcohol.

As water concentration of the alcohol, it is desirable to be 500 to 4500 ppm, more preferably 1000 to 4000 ppm, and most preferably to 2000 to 3500 ppm. Limiting the water concentration of the alcohol to such a range allows effective production of the aluminium alkoxide. In this connection, the water concentration of the alcohol is represented by weight of water with respect to the total weight of alcohol.

Alternatively, as a solvent constituting a liquid phase, a solvent may be used, which is inert to the metallic aluminium and is able to dissolve the alcohol and the aluminium alkoxide that is a product made from the alcohol, in addition to the alcohol. For example, a liquid phase may be composed of solvents, such as benzene and toluene together with alcohol. But a reaction rate will lower if ketone is contained in the solvent. From this, it is preferable for ketone concentration in the solvent containing the alcohol to be 130 ppm or less or so, below which no effect is had on a solid-liquid reaction.

No special limitation is imposed on a reaction temperature of the metallic aluminium and the alcohol, as long as a temperature at which a reaction progresses, but it is desirable to react under the conditions of a boiling point and reflux of solvents to be used, from point of view of accelerating a reaction between the metallic aluminium and the alcohol.

Through the aluminium alkoxide producing step S21, aluminium alkoxide containing an alkoxy group corresponding to the alcohol used is produced, as mentioned above. More specifically, as aluminium alkoxide, aluminium ethoxide, aluminium n-propoxide, aluminium isopropoxide, aluminium n- butoxide, aluminium sec-butoxide, and aluminium t-butoxide or the like are produced.

In the hydrolyzing step S22 to be mentioned later, a hydrolysis treatment is applied to the above-mentioned aluminium alkoxide produced in the aluminium alkoxide producing step S21. Alternatively, the aluminium alkoxide to be used at this time may use a derivative produced by chemical modification within the limits within which a physical property of the aluminium hydroxide to be produced is not impaired, or a mixture of the derivative and the aluminium alkoxide.

(2) Hydrolyzing step

In the hydrolyzing step S22, the aluminium alkoxide produced in the aluminium alkoxide producing step S21 is hydrolyzed to produce the aluminium hydroxide. The aluminium hydroxide to be produced by the hydrolysis is normally ultrafine particles having a particle size of several ten nm, though it varies depending on conditions of the hydrolysis.

A hydrolyzing rate of the aluminium alkoxide is very fast, where local hydrolysis reaction progresses and it is liable to produce a fine aluminium hydroxide. In the fine aluminium hydroxide of this kind, it is prone to occur strong agglomeration between particles, and thus easy to produce an aggregate. Thus, it becomes important to appropriately control conditions of the hydrolysis and to inhibit the agglomeration between particles.

Then, in the hydrolyzing step S22, it is desirable to apply a hydrolysis treatment of two steps to the aluminium alkoxide. Specifically, firstly, a hydrolysis treatment is progressed, as a first hydrolysis treatment, using an alcohol solution containing water having prescribed concentration, to a part of the aluminium alkoxide, and then a gentle hydrolysis reaction is caused, without creating a local reaction due to rapid heat generation (first hydrolyzing step S31). Secondly, water is further added, as a second hydrolysis treatment, to progress a hydrolysis treatment, to the total amount of the aluminium alkoxide (second hydrolyzing step S32).

Thus, hydrolyzing a part of the aluminium alkoxide using the alcohol solution containing water, and then hydrolyzing the total amount of the aluminium alkoxide further using water enable proper control of conditions of the hydrolysis, which inhibits the generation of strongly agglomerated particles, thereby allowing production of the aluminium hydroxide containing less agglomeration. Specifically, as mentioned above, the aluminium hydroxide whose cumulative pore volume (porous radius is within a range of 0.01 $\mu$m or more and 1 $\mu$m or less) is 0.6 mL/s or more, the loosed bulk density is 0.10 to 0.25 g/cm$^3$, and the tapped bulk density is 0.15 to 0.30 g/cm$^3$ can be produced by means of the mercury intrusion porosimetry.

Moreover, hydrolyzing the aluminium alkoxide using an alcohol solution containing water allows effective recovery of the alcohol used in the aluminium alkoxide producing step S21, in alcohol recovery to be mentioned later.

(2-1) First hydrolyzing step

More specifically, in the first hydrolyzing step S31, the aluminium alkoxide is hydrolyzed using an alcohol solution containing water having predetermined concentration.

In the first hydrolyzing step 31, an alcohol solution containing water having predetermined concentration is added, not only water, to a solution containing the aluminium alkoxide. Water concentration of the alcohol solution to be added is 5 to 30 wt %, preferably 5 to 20 wt %, and more preferably 5 to 10 wt %. In case that the water concentration in the alcohol solution is less than 5 wt %, hydrolysis becomes insufficient. Meanwhile, in case the water concentration in the alcohol solution exceeds 30 wt %, local hydrolysis occurs, and it is likely to produce agglomeration of the aluminium hydroxide.

Further, in the first hydrolyzing step S31, the alcohol solution containing water having the above-mentioned concentration is added for hydrolysis so that a molar ratio of water with respect to the aluminium alkoxide is 1.5 to 2.0. In case a molar ratio of the water in the alcohol solution with respect to the aluminium alkoxide is less than 1.5, hydrolysis of the aluminium hydroxide is inhibited to excess. Meanwhile, in case a molar ratio exceeds 2.0, hydrolysis of the aluminium alkoxide is accelerated, local hydrolysis is created, and it is likely to produce agglomeration of the aluminium hydroxide. Moreover, since excess water, which is not used for hydrolysis, comes to be contained, it falls into a situation where water is contained in the alcohol to be recovered in the alcohol recovery to be mentioned later, and when the alcohol is reused in the aluminium alkoxide producing step S21, it invites a lowered generation rate of the aluminium alkoxide, so that the aluminium alkoxide has poor productivity.

No special imitation is imposed on the alcohol solution containing water, but a solution may be used, in which water is added to alcohol, and which is used in the above-mentioned aluminium alkoxide producing step S21. As can be seen from the above, recovering the alcohol solution used for hydrolysis makes it possible to reuse the recovered alcohol in the aluminium alkoxide producing step.

No special limitation is imposed on a reaction temperature in hydrolyzing the aluminium alkoxide using the alcohol solution containing water, but, it may, for example, set to a temperature ranging from a normal temperature to a temperature lower than a boiling point of the solvent.

After completion of the hydrolysis treatment in the first hydrolyzing step S31, only the alcohol is separated and recovered, from a liquid mixture of the alcohol solution containing water, aluminium alkoxide, and aluminium hydroxide. Through the alcohol recovery conducted between the first hydrolysis step S31 and the second hydrolyzing step S32, pure alcohol not containing water can be recovered. The separated and recovered alcohol can be reused in the above-mentioned aluminium alkoxide producing step S21. No special limitation is imposed on the method for recovering the alcohol from a liquid mixture, but includes, for example, a method for separating and recovering alcohol by passing a liquid mixture in a column in which an ion exchange resin is being filled, after being subject to a hydrolysis treatment in the first hydrolyzing step.

(2-2) Second hydrolyzing step

Next, in the second hydrolyzing step S32, water is further added to a mixture where the alcohol is separated from the liquid mixture, after being subject to the first hydrolysis treatment, for applying a hydrolysis treatment to the total amount of the aluminium alkoxide.

In the second hydrolyzing step S32, water is added so that a molar ratio of the aluminium alkoxide with respect to water is 1.0 to 7.0, more preferably 1.5 to 3.0 to hydrolyze the aluminium alkoxide. In case a molar ratio of the aluminium alkoxide with respect to water is less than 1.0, it is likely to be unable to apply hydrolysis to the total amount of the aluminium alkoxide. Meanwhile, in case a molar ratio exceeds 7.0, the water content contained in the aluminium hydroxide to be produced will increase. Consequently, the time required for drying in a drying treatment becomes longer, so that the productivity decreases.

Even in the hydrolysis treatment in the second hydrolyzing step S32, no special limitation is imposed on the reaction temperature, but it may, for example, set to a temperature ranging from a normal temperature to a temperature lower than a boiling point of the solvent.

After having been subjected to a hydrolysis treatment in the above-mentioned second hydrolyzing step S32, a produced aluminium hydroxide is dried. Drying the aluminium hydroxide through the drying treatment produces a dry powder aluminium hydroxide. Further, even in the drying treatment, an alcohol solution can be recovered.

No special limitation is imposed on a drying method, but it is desirable to adopt, for example, a method for evaporating moisture by heating the aluminium hydroxide. Also, no special limitation is imposed on a drying temperature, but it is desirable to set, for example, to a temperature higher than a boiling point of the solvent. In addition, no special limitation is imposed on a drying method, but for example, a material ventilation dryer, a material transfer dryer, a material agitation dryer, a hot air transfer dryer, a cylindrical dryer, an infrared dryer, a freeze dryer, and a radio-frequency dryer may be available.

<1-3. Calcination of aluminium hydroxide>

As mentioned above, hydrolyzing the aluminium alkoxide allows production of the aluminium hydroxide whose cumulative pore volume (pore radius is 0.01 $\mu$m or more and 1 $\mu$m or less) is 0.6mL/g or more to be measured by means of the mercury intrusion porosimetry. In the method for producing alumina according to the present invention, the aluminium hydroxide is calcined to produce an alumina calcined body in the calcining step S11.

In the calcining step S11, the above-mentioned aluminium hydroxide is calcined to produces an alumina calcined body. In other words, calcining the aluminium hydroxide allows production of $\alpha$-alumina that is a high temperature stable phase through intermediate alumina ($\gamma$-alumina, $\delta$- alumina, and $\theta$-alumina). A transition from the intermediate alumina to the $\alpha$-alumina needs a high temperature as the transition is required to do rearrangement of oxygen filling, unlike a transition between the intermediate alumina.

No limitation is imposed on conditions of the calcination treatment in the calcining step S11, but thermal energy necessary for causing a phase transition from the aluminium hydroxide to the alumina is applied. For example, the aluminium hydroxide is calcined, at a temperature above 1200 °C, for more than 2 hours. Under these conditions, calcining the aluminium hydroxide produced through the aluminium alkoxide producing step S21 and the hydrolyzing step S22 enables prevention of the generation of an alumina aggregate which is strongly bonded and is hard to crush. Thus, crushing, under the conditions of a crushing treatment in a crushing step S12, to be mentioned later allows production of the high purity alumina containing less agglomerated particles.

Further, in the calcining step S11, it is desirable to calcine the aluminium hydroxide by applying thermal energy of 83736 to 146538 kJ (20000 to 35000 kcal) to the above-mentioned aluminium hydroxide of 1kg. In this way, calcining the aluminium hydroxide by applying the thermal energy of 83736 to 146538 kJ (20000 to 35000 kcal) enables production of an alumina calcined body whose average three-dimensional irregularity degree is 3.0 or more, and which has a shape, like a gourd.

Hereupon, the above-mentioned "three-dimensional irregularity degree" is a geometry parameter of one particle in the alumina calcined body, where a value is defined by the following formula (2), based on particle volume V ($\mu$m$^3$) and volume of rectangular parallelepiped La X Lb X Lc ($\mu$m$^3$) circumscribing the particles. Moreover, the "average three-dimensional irregularity degree" is an average value of the three-dimensional particle irregularity degree" calculated by the following formula (2) for any particles of 100 or more contained in powder.

$$\text{Three-dimensional particle irregularity degree} = La \ X \ Lb \ X \ Lc \ /V \ \ldots\ldots\ldots\ldots \text{formula (2)}$$

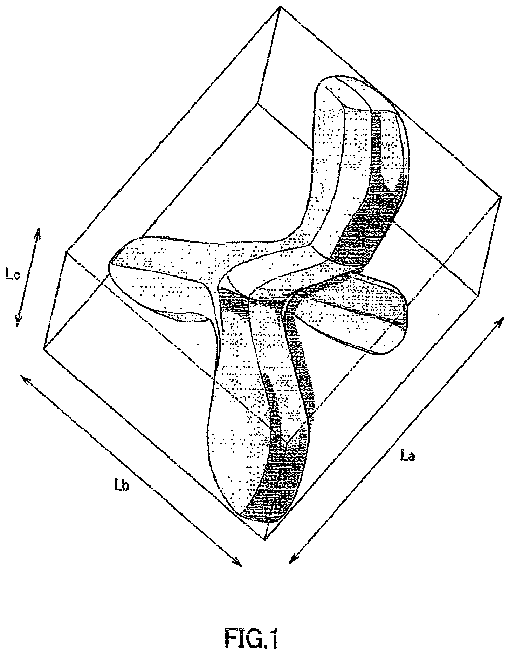

Where La denotes a major diameter of the particle, Lb denotes a middle diameter of particle, and Lc denotes a minor diameter of particle and La, Lb, and Lc are orthogonal to one another. Fig. 1 shows a schematic diagram for describing the three-dimensional particle irregularity degree. In this connection, the particle volume V, the major diameter La of particle, the middle diameter Lb of particle, and the minor diameter Lc of particle can be obtained by analyzing successive slice images of the particles to be targeted using the three-dimensional quantitative analysis software (for example, TRI/3D-PRT made by RATOC SYSTEM ENGINEERNING CO., LTD.).

The successive slice images of the particles can be acquired in the following manner. That is, a sample for evaluation obtained by curing a particle fixing resin (epoxy resin or the like) in which a specified amount of the alumina calcined body is dispersed is sliced by the FIB milling at specific intervals to acquire the predetermined number of sectional SEM images by repeating acquisition of the sectional SEM images. Then, the acquired sectional SEM images are synthesized by using a proper image analysis software (for example, Avizo ver 6.0 made by Visualization Sciences Group).

A specific evaluation procedure of the three-dimensional particle irregularity degree (sample preparing method for successive slice images, and determination method for V, La, Lb, and Lc by using a three-dimensional quantitative analysis software) will be detailed in Examples, taking an alumina particle as an example.

As mentioned above, calcining the aluminium hydroxide by applying thermal energy of 83736 to 146538 kJ (20000 to 35000 kcal) to the aluminium hydroxide allows production of an alumina calcined body whose average three-dimensional particle irregularity degree is 3.0 or more, more preferably 3.5 or more. Further, as an upper limit of the average three-dimensional particle irregularity degree, it is desirable to be 10.0 or less, more preferably 6.0 or less. The alumina calcined body of this kind can preferably be used, as a material, for example, for an inorganic oxide porous membrane of a lithium ion secondary battery. This enables formation of an inorganic oxide porous membrane having good ion permeability and excellent heat resistance and insulation property.

In case an average three-dimensional particle irregularity degree is less than 3.0, porosity of the inorganic oxide porous membrane decreases, which is obtained by slurrying the alumina calcined body, and by coating the slurried alumina calcined body on a surface of an electrode mixture layer containing an electrode active material (positive electrode active material or negative electrode active material) and a binder, followed by drying the coated alumina calcined body. As a result, it is unfavorable as the amount of an electrolyte solution to be held in the inorganic oxide porous membrane reduces. In case the average three-dimensional particle irregularity degree exceeds 10.0, porosity of the inorganic oxide porous membrane also increases, which is obtained by slurrying the alumina calcined body, and by coating the slurried alumina calcined body on a surface of the electrode mixture layer containing an electrode active material (positive electrode active material or negative electrode active material) and the binder, followed by drying the coated alumina calcined body. Therefore, it is likely to degrade the strength of the inorganic oxide porous membrane.

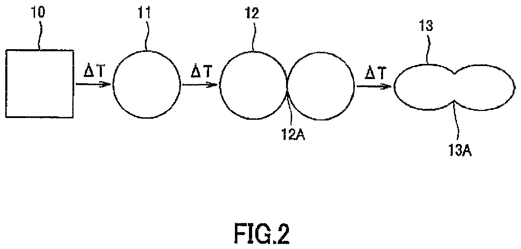

Specifically, in the calcining step S11, as schematically shown in Fig.2, calcination is applied to the above-mentioned aluminium hydroxide 10 with a calcination temperature as above 100 °C. This removes water contained in the aluminium hydroxide 10, thereby producing an alumina calcined body 11. Then, the alumina calcined body 11 is calcined at a temperature above 1000 °C. This produces an alumina calcined body 12 in which the alumina calcined bodies 11 are bonded to each other by necking. Subsequently, the alumina calcined body 12 is calcined while being held for a fixed time, at a calcining temperature above 1000 °C. More specifically, the alumina calcined body 12 is, for example, held, for 3.3 to 4.4 hours, at a calcining temperature of 1230 to 1240 °C, so that an alumina calcined body is calcined by applying thermal energy of 83736 to 146538 kJ (20000 to 35000 kcal) to the aluminium hydroxide of 1 kg.

Applying a calcination treatment to the aluminium hydroxide in this manner allows production of an alumina calcined body 13, in which a bonding site (neck portion) 12A between the alumina calcined bodies 12 spreads like a bonding site 13A and has a shape of gourd whose three-dimensional irregularity degree is 3.0 or more. Note that when producing the alumina calcined body having a shape of gourd whose three-dimensional irregularity degree is 3.0 or more, it should calcine the alumina calcined body 12 by applying thermal energy thereto, within the above-mentioned predetermined range, and therefore limitation is not necessarily imposed on the above-mentioned calcining temperature and the holding time.

No special limitation is imposed on a temperature rising rate at the time when a temperature rises to a predetermined calcining temperature, but it is, for example, 30 to 500 °C/hr.

A calcination treatment to the aluminium hydroxide can be made, for example, by a calcination furnace. As a calcination furnace, it may use a material ventilation calcination furnace, for example, a tunnel kiln, a batch airflow box calcination furnace, and a batch parallel airflow box calcination furnace or the like.

Additionally, no special limitation is imposed on a calcination atmosphere, but it may be any one of an inert atmosphere, such as a nitrogen gas and an argon gas, or a reducing atmosphere, in addition to an air atmosphere.

Alternatively, in the calcining step S11, prior to a calcination treatment, an alumina calcined body may be produced by granulating the aluminium hydroxide, predrying the granulated material, filling the granulated material after predrying into a calcination container made of high purity alumina.

Thus, filling the granulated material of the aluminium hydroxide after predrying into the calcination container allows reduction of a loss due to scattering of the granulated material during calcination. Further, predrying the granulated material produced by granulating the aluminium hydroxide allows an effective filling operation into the calcination container.

No special limitation is imposed on the calcination container, but it may use a capsule having, for example, a square shape, a bottomed circular shape, and a polygonal pillar shape. It is preferable for the calcination container to use a container made of alumina ceramics. The use of the calcination container made of alumina ceramics prevents the contamination of alumina during calcination, which produces high purity alumina.

<2. Crushing step of alumina calcined body>

Next, in the method for producing the alumina according to the present invention, the alumina calcined body thus produced as above in the crushing step S12 is crushed. Crushing the alumina calcined body in this way allows production of the high purity alumina powder which has a small particle size, a monodispersed sharp particle size distribution, and contains less agglomerated particles.

At this moment, the method for producing the alumina according to the present invention is characterized in that the alumina calcined body is crushed so that a speed at which the alumina calcined body passes through a crushing chamber of the airflow crusher using the airflow crusher is 500 m/s or more. This easily crushes the agglomerated particles produced attendant on calcination, thereby producing alumina containing less agglomerated particles.

Incidentally, as an upper limit of a speed at which the alumina calcined body passes through the crushing chamber, it is desirable to be about 1000 m/s or less. In case a speed exceeds 1000 m/s, it is likely to occur reagglomeration of the particles caused by excessive crushing. Besides, in a case where alumina having a shape of gourd is, for example, formed, it falls into a situation where a necking portion thereof is broken off, ending in failure to produce alumina whose average three-dimensional particle irregularity degree is 3.0 or more.

Since in a case where a crusher having a higher crushing capability, such as, for example, a vibration mill other than the airflow crusher is used, contamination generated from a crushing medium and reagglomeration of the particles will occur, it is unable to produce high purity alumina containing less agglomerated particles. Further, the necking portion of the alumina having a shape of gourd is broken off, and thus it precludes alumina whose average three-dimensional particle irregularity degree is 3.0 or more from being produced.

In the airflow crusher used for a crushing treatment, alumina particles ride on a ultrahigh jet, such as high pressurized compressed air and steam jet out from a nozzle, and the alumina particles move at a high speed to collide against one another, which crushes the alumina particles into particles having a size of 1 $\mu$m or less owing to the collision among the particles. This easily disperses the agglomerated particles produced during calcination, thus eliminating the agglomerated particles. Moreover, the use of the airflow crusher may have expectation for production of a collision effect not only between the particles, but also against a collision plate (powder contact portion) provided within the crushing chamber of the crusher, which more effectively crushes the agglomerated particles, thereby eliminating the generation of coarse particles.

No special limitation is imposed on the airflow crusher used for a crushing treatment, but it is desirable to use a jet mill able to control crushing conditions by mutually regulating pressure of compressed air, air volume to be used, and a supply amount of powdered body, as a temperature drop occurs due to adiabatic expansion of air.

As a supply rate of the alumina calcined body that is raw materials to be supplied to the airflow crusher, it is desirable to constantly supply the alumina calcined body within a range of 10 to 25 kg/hr. In case the supply rate is less than 10 kg/hr. and exceeds 25 kg/hr, it becomes insufficient in crushing of the supplied alumina calcined body, produces many uncrushed products, and may generate, in some cases, the agglomerated particles.

No special limitation is imposed on a method for constantly supplying the alumina calcined body that is raw materials, but it is desirable to supply the alumina calcined body in combination with a fixed quantity supplying machine and a sieving machine. Because rough particles having a size more than a few millimeters contained in the powdered body not only takes a lot of time for crushing, but also causes wear and breakage or the like to the crusher, taking measures to remove the rough particles by the sieving machine is favorable from the perspective of effectiveness. It is desirable to install a simple disintegrator in the sieving machine. Since passing the rough particles through the simple disintegrator allows previous disintegration of the rough particles before crushing thereof, which improves productivity, and allows constant and quantitative supply of raw materials to the crushing chamber, thereby preventing the generation of the agglomerated particles.

It is preferable for compressed air pressure to be jetted via a nozzle into the crushing chamber of the airflow crusher to set to 0.6 to 0.9 MPa. This increases a speed of an alumina calcined body within the crushing chamber to 500 m/s or more, which produces alumina containing less agglomerated particles.

Further, as air volume in the airflow crusher, it is desirable to be 8 to 10 m$^3$/min. For this reason, when necessary compressed air pressure is, for example, 0.6 to 0.9 MPa, a general-purpose industrial compressor becomes available.

Furthermore, as for the above-mentioned airflow crusher, it is desirable to use a crusher in which a powder contact member (member against which the alumina calcined body collides) within the crushing chamber of the airflow crusher, or all the members within the crushing chamber are made of SUS or alumina ceramics. Moreover, it is desirable to use a crusher in which a urethane lining having abrasion resistance is applied to product discharge piping underneath the airflow crusher. Thereby, it enables production of high purity alumina powder occurring little foreign matters mixing.

As mentioned above, according to the method for producing the alumina of the present embodiment, the method involves producing the aluminium alkoxide by a solid-liquid reaction between the metallic aluminium and the alcohol; producing the aluminium hydroxide by hydrolyzing the aluminium alkoxide; and producing an alumina calcined body by calcining the aluminium hydroxide: and crushing the alumina calcined body, with a speed at which the alumina calcined body passes through a jet mill of 500 m/s or more.

According to the method for producing the alumina of the present invention, the invention enables production of high purity alumina containing less agglomerated particles and occurring little foreign matters mixing.

Specifically, the invention enables production of alumina whose average particle size is 1 $\mu$m or less, and oxide purity is 90 wt % or more. In this connection, the terminology "average particle size" defined herein signifies a particle size equivalent to 50 % cumulative percentage by mass obtained by means of the laser diffractometry. The "oxide purity" can be measured by the solid emission spectrography, and calculated by subtracting the total weight of impurities contained in the alumina from 100.

The content of the alumina agglomerated particles having a particle size of 20 $\mu$m or more is 10 ppm or less, the number of foreign matters other than the alumina having a particle size of 20 $\mu$m or more is 200 or less per alumina of 500 g.

The content of Si, Na, Ca, Fc, Cu, and Mg of the alumina is respectively 10 ppm or less. As mentioned above, these impurities are measured by means of the emission spectrography.

The alumina has a BET specific surface area of 1 to 10 $m^2$/g. In this connection, the BET specific surface area can be found by the nitrogen absorption method following the method specified in JIS-Z-8830.

Examples

Hereinafter, while a description will be made to Examples of the present invention, the present invention is not necessarily limited only to Examples to be mentioned later. In the following Examples, evaluation and measurement of respective physical properties arc conducted as in the following.

<Cumulative pore volume, pore radius R, and pore distribution curve of aluminium hydroxide>

A sample devoted to measurement is dried by a dryer, at a temperature of 120 °C, for 4 hours to precisely weigh the sample after drying for taking it as sample weight. The sample after drying is set to a cell of the pore volume measuring device (auto pore III9420 made by MICROMERITICS), and mercury is filled within the system after inside the cell system is dropped below 50 $\mu$m Hg. Then, pressure is gradually applied to the cell from 0.007 MPa to 414 MPa to measure the amount of mercury intrusion, under each pressure, with an intrusion equilibrium waiting time as 10 sec.

The cumulative pore volume (mL/g) is found by dividing the total amount of mercury intrusion (mL) at the time when pressure is applied from 0.007 MPa to 414 MPa by the sample weight (g). Further, the pore radius R ($\mu$m) is, under each pressure P, is calculated from the amount of mercury intrusion based on the above-mentioned Washburn's formula. Moreover, a pore distribution curve is obtained by plotting the measurement results, taking a pore radius R ($\mu$m), with each pressure P calculated based on the Washburn's formula as a horizontal axis, and the amount of mercury intrusion (dV/d log R[mL/g]) as a vertical axis.

<Bulk density>

The loosed bulk density is found as follows. That is, a sample of 9 to 10mL is cast into a measuring cylinder of 10 mL, weight (g) of the sample is measured, the measuring cylinder is turned over with a cover put thereon, the measuring cylinder is turned back to its original state, and volume ($cm^3$) of the sample is thereafter measured at the time when the sample is freely fallen gently. On this occasion, turning over and turning back of the measuring cylinder are repeated 3 times to find the average volume ($cm^3$), and a value of sample weight /sample average volume is taken as the loosed bulk density (g/$cm^3$).

The tapped bulk density is found as follows. That is, the measuring cylinder in which a sample is contained after the measurement of the loosed bulk density is freely fallen, 100 times, from the height of 3 cm, on a hard rubber board, the volume ($cm^3$) of the sample is thereafter measured, and a value of sample weight/ sample volume is taken as the tapped bulk density (g/$cm^3$).

<Content of impurities>

The content of Si, Na, Ca, Fe, Cu, and Mg are measured by means of the emission spectrography (THERMO Jarrell Ash CID-DCA AURORA).

<Average particle size and D90 particle size>

A particle size equivalent to cumulative percentage 50% by mass is taken as an average particle size, and a particle size equivalent to cumulative percentage 90% by mass is taken as a D90 particle size, each being measured by means of the laser diffractometry using the laser particle size analyzer (Microtrac made by NIKKISO CO., LTD.). In this instance, ultrasonic dispersion is made using a sodium hexametaphosphate solution of 0.2 wt %.

<Content of alumina agglomerated particles of 20 $\mu$m or more>

Alumina powder of 200 g is gradually put into a tall beaker of 1000 mL containing a 0.4 wt % sodium hexametaphosphate solution of 750mL, and then ultrasonic dispersion is made, for 5 minutes, while stirring the alumina powder by a stirring rod. Produced alumina slurry is poured on a standard sieve having an aperture of 20 $\mu$m, a residue on the sieve is put into an evaporating dish, dried at a temperature of 110 °C, the mass thereof is then divided by the amount of sample to calculate the content of alumina agglomerated particles.

<Number of foreign matters other than alumina of 20 $\mu$m or more>

Alumina powder of 500 g is gradually put into a poly beaker containing a 0.2 wt % sodium hexametaphosphate solution of 4000 mL, and then ultrasonic dispersion is made for 20 minutes. Produced alumina slurry is filtered with a filter paper having a mesh of 20 $\mu$m, and then the number of colored foreign matters is counted under the optical microscope.

<BET specific surface area>

A BET specific surface area is found by the nitrogen absorption method following the method defined in JIS-Z-8830. As a specific surface area measuring apparatus, "Flow Sorb II 2300" made by SHIMADZU is used.

<Average three-dimensional particle irregularity degree>

A dispersant 2 wt. part and alumina particle powder 2 wt. part are dispersed into an epoxy resin 100 wt. part. After vacuum deaeration, a curing agent 12 wt. part is put and a produced alumina dispersed epoxy resin is poured into a silicon mold for curing thereof. After a cured sample is fixed to a sample stage, carbon is deposited, the sample is set to FIB-SEM (HELIOS 600 made by FEI), the FIB milling is applied thereto by an accelerating voltage of 30 kV to form a cross section, and the cross section is observed under the SEM by an acceleration voltage of 2 kV. After observation, the FIB milling is again applied thereto with a thickness of 20 nm in a depth direction of the sample to newly form a cross section, and the cross section is observed under the SEM. In this manner, the FIB milling and SEM observation of the cross section are repeated at intervals of 20 nm to acquire images more than 100 images. A position correction is made by using the image analysis software (Avizo ver. 6.0 made by Visualization Sciences Group) to acquire successive slice images. Slicing is set to 20 nm/pix for every 3 axes.

A three-dimensional analysis of the alumina particles is applied to the acquired successive slice images to calculate a three-dimensional particle irregularity degree. For the three-dimensional quantitative analysis, the quantitative analysis software TRI/3D-PRT (made by RATOC SYSTEM ENGINEERING CO., LTD.) is used. The three-dimensional quantitative analysis is made as follows. That is, a file of the successive slice images are firstly open on the TRI/3D-PRT, noises are removed by applying a median filter. Subsequently, three-dimensionally isolated particles are respectively distinguished by labeling, and then particles are removed, which are interrupted at a periphery of a measuring area. Particle volume V of any particle, a major diameter La of particle, middle diameter Lb of particle, and a minor diameter Lc of particle are found from out of the particles which are left unremoved in this processing. A three-dimensional irregularity degree is calculated from "three-dimensional particle irregularity degree = La X Lb X Lc/V".

Then, as an average value of particle irregularity degree of more than 100 particles obtained in this way, an average three-dimensional particle irregularity degree is found.

[Example 1]

High purity metallic aluminium having purity of 99.99 % or more and isopropyl alcohol having purity of 99.9 % or more are continuously cast into a loop reactor filled with an isopropyl alcohol solution containing at least 10 wt % or more of the aluminium alkoxide. A mixed solution containing the aluminium alkoxide of 100 wt. part and isopropyl alcohol of 15 wt. part is continuously discharged from a right side of the connected head.

The solution is poured into a reaction vessel into which a mixing impeller is inserted, a mixed solution containing pure water of 15 wt. part and isopropyl alcohol of 168 wt. part are added thereto while stirring the mixed solution, and the aluminium alkoxide is thereafter hydrolyzed (water/ aluminium alkoxide (molar ratio) = 1.7). Then, the isopropyl alcohol is separated as much as 98 wt. part by an evaporating operation, the isopropyl alcohol is recovered by a condensing operation, the isopropyl alcohol is hydrolyzed by adding pure water of 17 wt. part (water/aluminium alkoxide (molar ratio) = 2.6), and a suspension containing the aluminium hydroxide, water and the isopropyl alcohol is produced.

The suspension is transferred to another reactor into which the mixing impeller is inserted, water and the isopropyl alcohol contained in the suspension are removed while heating the reactor, and the aluminium hydroxide is produced, whose cumulative pore volume (pore radius is within a range of 0.01 to 1 $\mu$m) is 1.77 mL/g, loosed bulk density is 0.14 g/ cm$^3$, and tapped bulk density is 0.17 g/ cm$^3$.

The aluminium hydroxide is calcined in a continuous calcination furnace, at a maximum temperature of 1230 °C, for 4 hours, to produce an alumina calcined body. Herein, thermal energy applied to the aluminium hydroxide in the calcining step was 101480 kJ/kg (24238 kcal/kg).

The alumina calcined body is simply crushed by means of the vibration sieving machine, and then the alumina calcined body is supplied, at a supply rate of 15 kg/hr, to the jet mill crusher (horizontal jet mill crusher PJM-380SP made by NIPPON PNEUMATIC MFG CO., LTD.) where the alumina calcined body is crushed. An alumina member is used in the powder contact portion, such as the inside of the crusher and an air supply port or the like. Further, urethane lining is applied to outlet piping of the jet mill crusher. Gage pressure at an air supply port during crushing was 0.65 MPa and a wind velocity in the crusher is calculated by using Mach number at an outlet of a jet nozzle was 662 m/s.

$$Ma = (2[1-(Pe/Po)^{\wedge}K-1/K]/(K-1)\times(Pe/Po)^{\wedge}K-1/K)^{\wedge}1/2$$

Ma: Mach number at outlet of jet nozzle = 340 m/s
Pe: absolute pressure at inlet of jet nozzle
Po: absolute pressure at outlet of jet nozzle
K: adiabatic exponent
(Source: Powder Science & Engineering, vol.19, No.9 (1987), p72)

An average particle size of the produced alumina power was 0.65 $\mu$m and D90 was 1.95 $\mu$m. Further, the content of the alumina agglomerated particles over 20 $\mu$m was 1 ppm and the number of foreign matters other than the alumina was 45. Furthermore, the measurement of the content of impurities showed that Si =3 ppm, Fe = 4 ppm, Ca = 1 ppm, Na = 2 ppm, Cu = 1 ppm, and Mg = 1 ppm.

The BET specific surface area was 4.6 m$^2$/g and the average three-dimensional irregularity degree of 128 particles was 3.7.

[Example 2]

An alumina calcined body produced following the method described in Example 1 is crushed in a similar manner. From the results that gauge pressure in front of the air supply port was 0.8 MPa, a wind velocity in the crusher was 742 m/s.

An average particle size of the produced alumina powder was 0.75 $\mu$m and D90 was 2.05 $\mu$m. Further, the content of alumina agglomerated particles over 20 $\mu$m was 2 ppm and the number of foreign matters other than the alumina was 98. Furthermore, the measurement of the content of impurities showed that Si = 4 ppm, Fe = 4 ppm, Ca = 1 ppm, Na = 2 ppm, Cu = 1 ppm, and Mg = 1 ppm.

The BET specific surface area was 4.6 m$^2$/g.

[Comparative Example 1]

An aluminium hydroxide produced following the method described in Example 1 is again humidified and dried to produce an aluminium hydroxide, whose cumulative pore volume having a pore radius R within a range of 0.01 to 1 $\mu$m is 0.21 mL/g, loosed bulk density is 0.72 g/cm$^3$, and tapped bulk density is 0.91 g/cm$^3$.

The aluminium hydroxide is calcined under the conditions described in Example 1 and crushed to produce alumina powder.

An average particle size of the produced alumina power was 0.85 μm and D90 was 2.58 μm. Further, the content of the alumina agglomerated particles over 20 μm was 1023 ppm. Furthermore, the measurement of the content of impurities showed that Si =6 ppm, Fe =17 ppm, Ca = 1 ppm, Na = 2 ppm, Cu = 1 ppm, and Mg = 2 ppm.

The BET specific surface area was 4.3 m$^2$/g.

[Comparative Example2]

An alumina calcined body produced following the method described in Example 1 is crushed under gage pressure of 0.3 MPa in front of the air supply port. A wind velocity inside of the crusher was 413 m/s.

An average particle size of the produced alumina power was 0.72 μm and D90 was 2.26 μm. Further, the content of the alumina agglomerated particles over 20 μm was 14 ppm. Furthermore, the measurement of the content of impurities showed that Si =3 ppm, Fe = 3 ppm, Ca = 1 ppm, Na = 2 ppm, Cu = 1 ppm, and Mg = 1 ppm.

The BET specific surface area was 4.6 m$^2$/g.

Reference Sign List

10... aluminium hydroxide
11, 12, 13 ... alumina calcined body
12A...neck portion
13A... bonding site (neck portion)

**Claims**

1. A method for producing alumina comprising:

   a calcining step of calcining aluminium hydroxide which is produced by hydrolyzing aluminium alkoxide and whose cumulative pore volume, pore radius is within a range of 0.01 μm or more and 1 μm or less, is 0.6 mL/g or more, measured by means of mercury intrusion porosimetry, to produce an alumina calcined body; and
   a crushing step of crushing the alumina calcined body by an airflow crusher, with a speed at which the alumina calcined body passes through a crushing chamber of the airflow crusher of 500 m/s or more.

2. The method for producing alumina according to claim 1, wherein the aluminium hydroxide has loosed bulk density of 0.10 to 0.25 g/cm$^3$, and tapped bulk density of 0.15 to 0.30 g/cm$^3$.

3. The method for producing alumina according to claim 1, wherein the aluminium hydroxide is produced by an aluminium hydroxide producing step comprising:

   a first hydrolyzing step of hydrolyzing the aluminium alkoxide by adding an alcohol solution, whose water concentration is 5 to 30 wt %, to a solution containing the aluminium alkoxide produced by a solid-liquid reaction between metallic aluminium and alcohol so that a molar ratio of water with respect to the aluminium alkoxide is 1.5 to 2.0; and
   a second hydrolyzing step of hydrolyzing the aluminium alkoxide by adding water to a liquid mixture which is being subject to the first hydrolyzing step so that a molar ratio of the aluminium alkoxide with respect to water is 1.0 to 7.0, after separating and recovering the alcohol from the liquid mixture.

4. The method for producing alumina according to claim 3, wherein the aluminium alkoxide is aluminium isopropoxide,

5. The method for producing alumina according to claim 1, wherein
in the calcining step, the aluminium hydroxide is calcined by applying thermal energy of 83736 to 146538 kJ (20000 to 35000 kcal) to the aluminium hydroxide of 1 kg.

6. The method for producing alumina according to claim 1, wherein
the crushing chamber of the airflow crusher has a powder contact portion against which a rotating particle of the alumina calcined body collides, and the powder contact portion is made of SUS or alumina ceramics.

**Patentansprüche**

1. Ein Verfahren zur Herstellung von Aluminiumoxid, umfassend:

   einen Kalzinierungsschritt des Kalzinierens von Aluminiumhydroxid, das durch Hydrolisieren von Aluminiumalkoxid hergestellt wird und dessen kumulatives Porenvolumen, der Porenradius liegt innerhalb eines Bereiches von 0,01 $\mu$m oder mehr und 1 $\mu$m oder weniger, 0,6 mL/g oder mehr beträgt, gemessen mittels Quecksilber-Intrusions-Porosimetrie, um einen Aluminiumoxid-kalzinierten Körper herzustellen; und
   einen Zerkleinerungsschritt des Zerkleinerns des Aluminiumoxid-kalzinierten Körpers durch einen Luftstromzerkleinerer mit einer Geschwindigkeit, bei welcher der Aluminiumoxid-kalzinierte Körper eine Zerkleinerungskammer des Luftstromzerkleinerers durchläuft, von 500 m/s oder mehr.

2. Das Verfahren zur Herstellung von Aluminiumoxid gemäß Anspruch 1, wobei das Aluminiumhydroxid eine gelöste Schüttdichte von 0,10 bis 0,25 g/cm$^3$ und eine Rütteldichte von 0,15 bis 0,30 g/cm$^3$ aufweist.

3. Das Verfahren zur Herstellung von Aluminiumoxid gemäß Anspruch 1, wobei das Aluminiumhydroxid durch einen Aluminiumhydroxid-Herstellungsschritt hergestellt wird, umfassend:

   einen ersten Hydrolisierungsschritt des Hydrolisierens des Aluminiumalkoxids durch Hinzufügen einer Alkohollösung, deren Wasserkonzentration 5 bis 30 Gew.-% beträgt, zu einer Lösung, welche das Aluminiumalkoxid enthält, welches durch eine Fest-Flüssig-Umsetzung zwischen metallischem Aluminium und Alkohol hergestellt wurde, sodass ein Molverhältnis von Wasser zu Aluminiumalkoxid 1,5 bis 2,0 beträgt; und
   einen zweiten Hydrolisierungsschritt des Hydrolisierens des Aluminiumalkoxids durch Hinzufügen von Wasser zu einem flüssigen Gemisch, welches dem ersten Hydrolisierungsschritt unterzogen wird, sodass ein Molverhältnis des Aluminiumalkoxids zu Wasser 1,0 bis 7,0 beträgt, nach Abtrennung und Rückgewinnung des Alkohols aus dem flüssigen Gemisch.

4. Das Verfahren zur Herstellung von Aluminiumoxid gemäß Anspruch 3, wobei das Aluminiumalkoxid Aluminiumisopropoxid ist.

5. Das Verfahren zur Herstellung von Aluminiumoxid gemäß Anspruch 1, wobei im Kalzinierungsschritt, das Aluminiumhydroxid durch Anwenden von thermischer Energie von 83736 bis 146538 kJ (20000 bis 35000 kcal) auf 1 kg des Aluminiumhydroxids kalziniert wird.

6. Das Verfahren zur Herstellung von Aluminiumoxid gemäß Anspruch 1, wobei die Zerkleinerungskammer des Luftstromzerkleinerers einen Pulverberührungsabschnitt aufweist, mit dem ein rotierendes Teilchen des Aluminium-kalzinierten Körpers kollidiert und wobei der Pulverberührungsabschnitt aus SUS oder Aluminiumoxidkeramik hergestellt ist.

**Revendications**

1. Méthode de production d'alumine comprenant :

   une étape de calcination comprenant la calcination d'un hydroxyde d'aluminium qui est produit par hydrolyse d'alcoxyde d'aluminium et dont le volume de pores cumulé à un rayon de pores dans une plage de 0,01 $\mu$m ou plus et 1 $\mu$m ou moins, mesuré par porosimétrie par intrusion de mercure, est de 0,6 mL/g ou plus pour obtenir un corps calciné d'alumine ; et
   une étape de concassage comprenant le concassage du corps calciné d'alumine par un concasseur à flux d'air, à une vitesse à laquelle le corps calciné d'alumine traverse une chambre de concassage du concasseur à flux d'air à 500 m/s ou plus.

2. Méthode de production d'alumine selon la revendication 1, dans laquelle l'hydroxyde d'aluminium a une densité apparente à l'état non tassé de 0,10 à 0,25 g/cm$^3$, et une densité apparente à l'état tassé de 0,15 à 0,30 g/cm$^3$.

**3.** Méthode de production d'alumine selon la revendication 1, dans laquelle l'hydroxyde d'aluminium est produit par une étape de production d'hydroxyde d'aluminium comprenant :

une première étape d'hydrolyse comprenant l'hydrolyse de l'alcoxyde d'aluminium par ajout d'une solution d'alcool, dont la concentration d'eau est de 5 à 30 % en poids, à une solution contenant l'alcoxyde d'aluminium produit par une réaction solide-liquide entre l'aluminium métallique et l'alcool de façon qu'un rapport molaire de l'eau à l'alcoxyde d'aluminium est de 1,5 à 2,0 ; et
une seconde étape d'hydrolyse comprenant l'hydrolyse de l'alcoxyde d'aluminium par ajout d'eau à un mélange liquide qui a été soumis à la première étape d'hydrolyse de façon qu'un rapport molaire de l'alcoxyde d'aluminium à l'eau soit de 1,0 à 7,0, après séparation et récupération de l'alcool à partir du mélange liquide.

**4.** Méthode de production d'alumine selon la revendication 3, dans laquelle l'alcoxyde d'aluminium est l'isopropoxyde d'aluminium.

**5.** Méthode de production d'alumine selon la revendication 1, dans laquelle
dans l'étape de calcination, l'hydroxyde d'aluminium est calciné par application d'une énergie thermique de 83736 à 146538 kJ (20 000 à 35 000 kcal) à 1 kg d'hydroxyde d'aluminium.

**6.** Méthode de production d'alumine selon la revendication 1, dans laquelle
la chambre de concassage du concasseur à flux d'air comporte une partie contact de poudre avec laquelle une particule en rotation du corps d'alumine calciné entre en collision, et la partie contact de poudre est à base de SUS ou d'une céramique de type alumine.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H812325 B

**Non-patent literature cited in the description**

- Manufacturing Process of Ceramics. Ceramic society of Japan, 1984

- *Source: Powder Science & Engineering,* 1987, vol. 19 (9), 72